Europäisches Patentamt

European Patent Office

Office européen des brevets

(11) Publication number: **0 444 331 A1**

# EUROPEAN PATENT APPLICATION

(21) Application number: 90203489.1

(22) Date of filing: **21.12.90**

(51) Int. Cl.5: **G06K 1/12, B07C 3/18**

(30) Priority: **08.02.90 NL 9000303**

(43) Date of publication of application:
**04.09.91 Bulletin 91/36**

(84) Designated Contracting States:
**BE DE FR GB LU NL**

(71) Applicant: **B.V. SPECIAALDRUKKERIJ,
EUROPRINT WILDERVANK
De Zwaaikom, 2
NL- 9641 KV Veendam(NL)**

(72) Inventor: **Bouland,Hendrik
Golf van Riga 3
NL-9642 CH Veendam(NL)**

(74) Representative: **Morel, Christiaan F., Ir.Dr.
MORELPATENT, Postbus 10482
NL-7301 GL Apeldoorn(NL)**

(54) Method for marking objects, and printing ink for use with this method.

(57) Method for marking an object with a code which can be scanned by means of IR radiation, which code is applied by means of a suitable printing operation directly to a surface of the object, using a printing ink to which a colourless IR-absorption agent is added. All this is done in such a way that the absorption of IR radiation, in the scanned area of the object, in the parts which are not covered with this printing ink with colourless IR-absorption agent is negligible compared with the absorption in the parts covered with this printing ink, while the parts covered with this printing ink remain at least virtually entirely pervious to visible light. By preference the used printing ink is a colourless printing ink, and the code is applied to a coloured or uncoloured background of the object to be printed.

EP 0 444 331 A1

## METHOD FOR MARKING OBJECTS, AND PRINTING INK FOR USE WITH THIS METHOD.

The invention relates to a method for marking an object with a code which can be scanned by means of IR radiation and printing ink for the use of any of the methods according to the invention.

The use of a code to be scanned by means of a scanning device, in the form of marks applied to an object, which code must meet certain identifiability and security requirements, is becoming increasingly frequent. It can be achieved by means of the so-called bar code or another comparable code. With it, a rapid and unambiguous indication of the price to be paid or another characteristic to be identified can be obtained, while the type of product can also be indicated. For the scanning of such codes, IR scanners in particular are used, these scanners providing a more rapid and more accurate scanning than laser scanners. In this case a clear contrast must exist between the background and the print.

During the printing of packaging, such codes can be printed on a specific part thereof, or can be printed on adhesive labels which can be placed on the products or packs to be marked. Of course, such codes can also be used for other purposes, such as the marking of admission tickets or passes, banknotes and the like.

A disadvantage of this method of marking is that the code is unattractive in the case of packs or objects of a particular shape, while adhesive labels, if improperly applied, can also cover important parts of the package, such as information on the composition, the sell-by date etc. For use in the case of banknotes, admission tickets and the like such a code can easily be forged.

The invention provides a method for this purpose by means of which these disadvantages can be avoided. To this end, according to the invention this method for marking objects with a code is characterized in, that the code is applied by means of a suitable printing operation directly to a surface of the object, using a printing ink to which a colourless IR-absorption agent is added, all this in such a way that the absorption of IR radiation in the scanned area of the object, in the parts which are not covered with this printing ink with colourless IR-absorption agent is negligible compared with the absorption in the parts covered with this printing ink, while the parts covered with this printing ink remain at least virtually entirely pervious to visible light.

The invention also relates to a printing ink for the use with the methods according to the invention.

The marks or codes thus obtained can be applied invisibly in any colour to packs and objects, it only having to be ensured that they are applied to parts which can normally be scanned with a scanner which can, for example, form part of a vehicle for these objects or products.

In order always to obtain an unambiguous scanning irrespective of the colour of the background, it is advisable to use a substance which absorbs IR radiation, and which absorbs considerably more strongly in the wavelength range of the radiation used for scanning than in the neighbouring wavelength range, in order to ensure that the IR absorption of pigments present in the underlying material does not affect the scanning.

The printing inks to be used for this purpose are already being used in printing technology in order to permit weakening of the colour of coloured printing inks as required without affecting the quality of the ink.

This method can be carried out in various ways. In the first place, it is possible to work with a colourless ink, in other words, one not appreciably absorbing visible light, which absorbs the IR radiation sufficiently to obtain a clear contrast with the background during scanning of the code.

If the background itself strongly absorbs the IR radiation, for example in the event of a black pigment being present in said background, the code can be printed with a printing ink of the above-mentioned colourless type, to which pigment corresponding to the colour of the background is added, in which case an invisible print is then obtained, but where the contrast relative to the background during IR radiation is sufficient to obtain unambiguous scanning.

For printing in multicolour print, if the code has to be applied together with the multicolour print, the addition of a further operation for applying the code can be a disadvantage. In that case a colourless ink with IR absorption of the above-mentioned type is added to one of the component colour inks, and in particular the lightest (for example, yellow), and the code is then applied in a picture face which does not have this colour, and with such low density that the code remains invisible to the naked eye.

Such a code is advantageous not only for applications such as decorative packs, where a visible code is unattractive, but in particular also where counterfeiting must be prevented. The latter is the case, for example, with admission tickets for important sports competitions, concerts or other performances and similar security applications. The copying of such tickets by means of a photographic process, including multicolour photocopiers, then becomes impossible, since the coding marks are invisible also in such operations. Such counterfeiting requires too many special devices for it to be worthwhile in most cases.

The substances mentioned above, which increase IR absorption, are commercially available and are supplied by ICI Colours & Fine Chemicals, Manchester, UK.

These substances show an absorption spectrum in a broad IR region. Through the use of suitable measured quantities, an adaptation to the radiation used for scanning can then be obtained.

**Claims**

1. Method for marking an object with a code which can be scanned by means of IR radiation, **characterized in that** the code is applied by means of a suitable printing operation directly to a surface of the object, using a printing ink to which a colourless IR-absorption agent is added, all this in such a way that the absorption of IR radiation in the scanned area of the object, in the parts which are not covered with this printing ink with colourless IR-absorption agent is negligible compared with the absorption in the parts covered with this printing ink, while the parts covered with this printing ink remain at least virtually entirely pervious to visible light.

2. Method according to Claim 1, **characterized in that** the printing ink is a colourless printing ink, and in that the code is applied to a coloured or uncoloured background of the object to be printed.

3. Method according to Claim 1, **characterized in that** for printing of a background with an IR-radiation-absorbing colour used for scanning the code, a printing ink with at least approximately the same colour is used, which ink has a large enough quantity of a colourless constituent which absorbs this IR radiation for obtaining the contrast.

4. Method according to Claim 1, **characterized in that** in the case of multicolour printing a constituent which absorbs the IR radiation used for scanning is added to one of the inks, and in that the code is applied in a picture part where this colour does not appear or appears in very low density, which code in this case is printed in such a density that it is at least virtually invisible in visible light.

5. Printing ink for the use of the method according to any of Claims 1 - 4, **characterized in that** it contains a colourless ink constituent which at least hardly absorbs visible light and has the characteristics suitable for the envisaged printing operation in a concentration which is sufficient for the envisaged use.

6. Printing ink according to Claim 5, **characterized in that** it is coloured in a colour which does not appreciably absorb the IR radiation used for scanning.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 423 522 (AUZEL et al.)<br>* Figures 2-4; page 3, line 35 - page 9, line 36 *<br>– – – | 1-3,5 | G 06 K 1/12<br>B 07 C 3/18 |
| A | DE-A-3 701 329 (SCHULE)<br>* Whole document *<br>– – – | 1-3,5 | |
| A | DE-B-1 083 583 (STANDARD ELECTRIK LORENTZ)<br>* Whole document *<br>– – – | 1-3,5 | |
| P,X | EP-A-0 354 817 (ESSELTE METO INTERNATIONAL)<br>* Whole document *<br>– – – – – | 1-6 | |

|  | TECHNICAL FIELDS SEARCHED (Int. Cl.5) |
|---|---|
|  | G 06 K<br>B 07 C |

The present search report has been drawn up for all claims

| Place of search | Date of completion of search | Examiner |
|---|---|---|
| The Hague | 22 May 91 | FORLEN G.A. |